# EUROPEAN PATENT APPLICATION

(11) **EP 4 837 411 A1**
(43) Date of publication of application: **11.11.2026**
(21) Application number: 25736421.6
(22) Date of filing: 02.01.2025
(51) Int. Cl.: A01K 57/00

(54) **DEVICE FOR CAPTURING SPECIES EXTRANEOUS TO A BEEHIVE**

(30) Priority: 02.01.2024 ES 202430002
(71) Applicant: Losada Gonzalez, José Marí, 48260 Ermua (ES)
(72) Inventor: Losada Gonzalez, José Marí, 48260 Ermua (ES)
(74) Representative: Galbaian S.Coop.
(86) International application number: PCT/ES2025/070001
(87) International publication number: WO 2025/146518

(57) **Abstract**

The invention discloses a device (4) for capturing individuals of species alien to a colony of a beehive, such as, for example, Vespa velutina, configured to be located at the entrance (3), which comprises: an entrance unit (5), a passage cavity unit (6) comprising as many independent passage cavities (6-1; 6-2) as there are independent entrance sections (5-1; 5-2) of the entrance unit (5), and an adjusted passage unit (7), comprising as many adjusted passage sections (7-1; 7-2) as there are passage cavities (6-1; 6-2), arranged at the upper part of the corresponding passage cavity and arranged at the bottom part of one or more capture cavities (11-1; 11-2), wherein openings of two or more adjusted passage sections lead to the same associated capture cavity.

## Description

### TECHNICAL FIELD

The invention falls within the technical field of beehive entrance accessories.

### BACKGROUND OF THE INVENTION

WO2021141417 A1 shows a trap with a single passage cavity. KR 200372161Y Y1 shows a trap for a two-queen beehive with a single passage cavity per swarm. Most traps in the prior art work due to the positive phototaxis (attraction to light) and tendency to ascend of species alien to the beehive.

In traps of the prior art, when a specimen of a species alien to the beehive, such as the Vespa velutina (Asian hornet), enters the trap, it remains temporarily in a single passage cavity through which the bees continue to pass into the beehive. This activity attracts the attention of the specimen, which attacks them. Apart from the bee casualties it causes, the specimen takes longer to pass into the capture cavity and, after successive attacks, may even be attracted by the light entering through the entrance hole and exit through it, without entering into the capture cavity. Some traps of the above type have filters permanently interposed along the passage to the beehive entrance, which, by size discrimination, allow bees to pass through while preventing larger species from entering. These openings are usually adapted to prevent the passage of smaller specimens of the alien species, which also prevents larger drone bees from passing through to the outside. This makes it necessary to remove the traps during periods when the colony may swarm, otherwise the queen would be fertilised by smaller drones, which would lead to genetic regression in the colony. However, during these periods there may also be pressure from alien species, such as the Asian Hornet. This is becoming increasingly common. Many of the traps described above are bulky (e.g. 300x400x430 mm), difficult to handle (e.g. to install and remove) and take up a lot of space, including for transport, especially in the case of large apiaries. Installation and removal take a considerable amount of time.

### EXPLANATION OF THE INVENTION

The invention solves these problems by means of a device according to independent claim 1 or, as an alternative solution to the same problem, by means of two interrelated products specially adapted to interact with each other: a front device according to independent claim 2 and a base device according to independent claim 3, as well as a computer-readable medium for storing manufacturing instructions according to claim 17.

The invention solves the problem by dividing the internal volume of the trap, providing independent passages between the exterior and the beehive entrance, including independent passage cavities towards the beehive and towards the capture cavity or cavities for each entrance section. In this way, a specimen of an alien species, after entering the device and before passing into the capture cavity or cavities (due to positive phototaxis and the tendency of alien species to ascend), cannot be distracted, cannot attack bees circulating through other entrances and passage cavities, and cannot interrupt their normal work routine, which increases the passage rate of bees, reduces attacks and increases captures. Sharing the same capture cavity for two or more of these independent passages allows for larger capture cavities and therefore reduces the number of passages in the reverse direction, i.e. from the capture cavity to the passage cavities, thus increasing the effectiveness of capture and retention capacity of the capture cavity, as well as reducing the maintenance of the capture chamber (such as cleaning). Similarly, in its most general conception, the device does not provide any size discrimination filter interposed along the passage to the beehive entrance to prevent the Asian hornet or Vespa Velutina from entering the beehive, which allows the trap to remain in place during periods when the beehive is likely to swarm, thereby increasing protection and allowing specimens to be captured during such periods. The scalable modular design allows the size of the device to be reduced considerably. In the case of implementation using interrelated products (claims 2 and 3), faster activation and deactivation of the trap's functionality is achieved, avoiding the need to uninstall the base throughout the year, a more compact design and improved cleaning of the base device.

In a first embodiment according to claim 4, the solution is based on the alternative embodiment of the invention using the interrelated products of claims 2 and 3, where, preferably, a temporary fixing and locking mechanism is added. This embodiment allows the trap to be quickly and safely deactivated and activated temporarily. By simply removing the front device, the trap is completely deactivated and the beehive functions essentially the same as without the base device installed. In this way, the base can remain installed throughout the year, and the trap is quickly activated by simply inserting the front, which is locked by the mechanism.

In a second embodiment according to claim 5, the device allows air to enter the capture cavity, reducing the likelihood of alien species escaping through the adjusted passage openings. Preferably, it allows colony members of the beehive to exit directly to the outside from the capture cavity. In a third embodiment according to claim 6, the device comprises a single capture cavity, minimising maintenance tasks at the cost of a relative loss of flexibility in very specific applications. In a fourth embodiment according to claim 7, the pursuit of colony members by specimens of the alien species is made difficult without substantially affecting the flight capacity of the colony members during passage, which also allows the colony members to maintain a high exit speed.

In a fifth embodiment according to claim 8, the inclusion of passage filters increases the level of protection of the beehive by blocking the alien species from entering the beehive. In a particular embodiment, these filters are modular and removable. In this way, it is possible to remove only the passage filter modules at times of the year when their use is inadvisable, such as during periods when the beehive may swarm, and to reinstall them during times of the year when their use is advisable. In the case of implementation as interrelated products, the adjustment consists merely of removing the front device, removing the filters and reinserting the front device, which can be done relatively quickly.

In a sixth embodiment according to claim 9, the device has a higher capture probability. In a seventh embodiment according to claim 10, the device achieves a higher probability of successful transits from the passage cavity to the capture cavity and decreases the probability of passages in the reverse direction.

In an eighth embodiment according to claim 11, the arrangement of a cleaning and redirection opening allows the volume of the capture cavity to be increased flexibly by means of an external container, either directly or via a tube. The same opening can be used for suction cleaning, which is particularly advantageous in embodiments that do not have another cleaning mechanism. In an implementation using interrelated products, cleaning is generally faster by simply removing the removable front device for emptying and then reinserting it into the base.

In a ninth embodiment according to claim 12, the use of passage pre-filters allows the colony members to gain an advantage in terms of speed over a pursuing individual of an alien species, which is hindered in its passage, reducing the possibility of the bee being captured once the alien species has entered the passage cavity.

In a tenth embodiment according to claim 13, the device comprises an additional entrance accessory unit. While the arrangement of any device according to the invention is beneficial to the beehive, it interferes with the installation of other beehive entrance accessories such as pollen traps, mechanical parasite remover, accessories for the administration of food or medication, or for treatment or monitoring, among others. The beekeeper must choose which accessory to install. This tenth embodiment includes one or more such additional accessories within the device.

In an eleventh embodiment according to claim 14, the device allows for the evacuation and/or collection of material, such as varroa mites or pollen.

In a twelfth embodiment according to claim 15, the device allows the assembly of the entrance units, passage cavities and accessory in different orders to form a single assembly, which provides flexibility in the configuration of the device and speed of installation and removal.

In a thirteenth embodiment according to claim 16, the device facilitates the installation of accessories in the vicinity of the beehive entrance.

### BRIEF DESCRIPTION OF THE DRAWINGS

To complement the description being made and in order to aid in a better understanding of the characteristics of the invention, a set of drawings is attached as an integral part of this description, in which, for illustrative and non-limiting purposes, the following has been represented:
Figures 1 and 2 show a representation of devices according to the invention.
Figure 3 shows a representation of interrelated devices according to the invention.
Figure 4 shows an assembled representation of interrelated devices.
Figure 5 shows a representation of different mechanisms to deter individuals of the alien species from returning to the outside once passage has begun.
Figures 6, 7A and 7B show other devices according to the invention.
Figure 8 shows a locking device for the device according to the invention.
Figure 9 shows a representation of other devices according to the invention.

### PREFERRED IMPLEMENTATION OF THE INVENTION

In this description, for the sake of brevity, the alien species is exemplified as Vespa Velutina (or simply Velutina). However, the same principle applies to other species that prey on bees, are invasive, or carry parasites. The use of the expression "comprises" or "includes" does not indicate that the device consists solely of the elements indicated, but rather that these elements form part of the device, and other elements not explicitly indicated may also form part of it.

Although there are variations in size depending on the breed of the different bees, in terms of generally accepted passage dimensions for Western varieties, worker bees cannot pass through a space smaller than 4 mm, which tends to be propolised. The queen bee cannot pass through a space smaller than 4.3 mm (this is the reference size for queen excluders). Worker bees can pass through a 5 mm space, but lose part of the load on their legs (this is the reference size for pollen traps). Drone bees cannot pass through a space smaller than 5.2-5.4 mm (but both workers and queens can pass freely). Therefore, the openings of the present invention, which are designed to allow the passage of colony members and prevent the passage of larger individuals of other species, are preferably circular holes between 5 and 7 mm in diameter. Although several embodiments are described with openings of 7 mm in diameter, these could be between 5 and 7 mm, with a preferred range of 5.5 mm to 6 mm, and in particular 6 mm. When the openings are not circular, clearance dimensions (light passage), similar or equivalent area, or minimum dimension should be considered. For example, in the case of polygonal apertures, including hexagonal ones, the diameter could be that corresponding to the circle circumscribing said polygon, without prejudice to applying correction factors based on the anatomy of the species and/or the chosen shape. Alternatively or additionally, in the case of oval, elliptical or similar openings, this value could correspond to the maximum dimension (e.g. major axis of the ellipse), minimum dimension (e.g. minor axis of the ellipse), average dimension, or similar or equivalent cross-sectional area. Other bee species, such as Asian bees, may require other dimensions (see, for example, WO2021141417 A1).

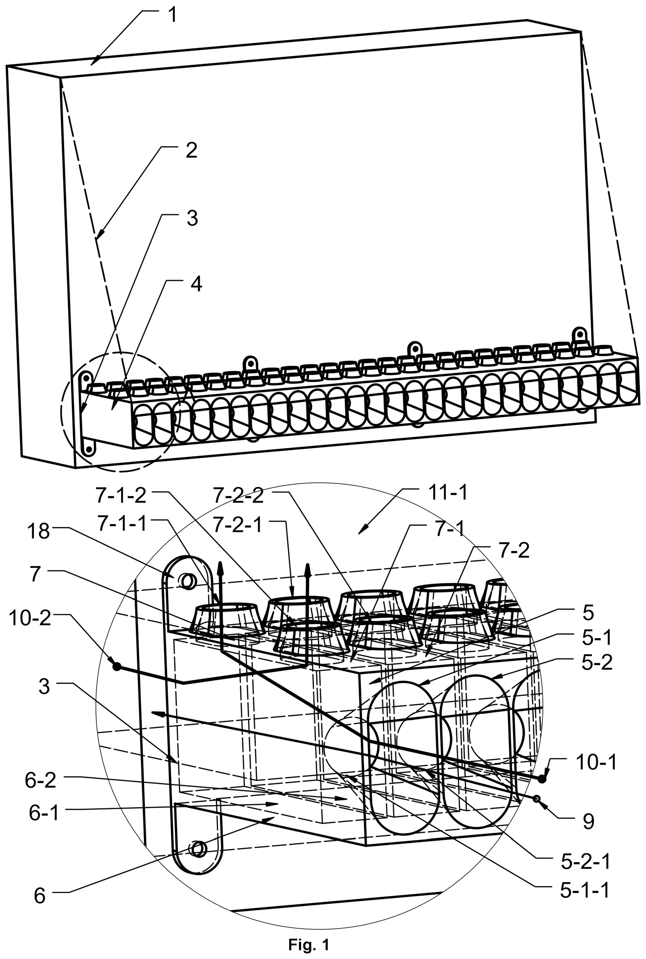

**Figure 1** shows a general version of the device of the invention (4), installed in the entrance (3) of a beehive (1) by means of screws (not shown) through the hole in the fastening element (18), where the beekeeper has placed a metal mesh (2) (the mesh pattern has been omitted from the illustration for ease of understanding). Although a mesh is shown, any enclosed area that allows light to pass through is in principle suitable for this purpose, with surfaces with openings being preferred as they allow ventilation through them. This metal mesh may be a square mesh with sides measuring 5-7 mm.

The device (4) is 100 mm wide between the outer surface of the entrance unit (5) and the beehive entrance (3). This distance determines the maximum speed at which the bee can exit, as it is the space available for it to accelerate and gain speed. The maximum exit speed is particularly important, since the higher the speed, the lower the probability that a bee leaving the beehive will be captured by a Velutina hornet lurking around the beehive, as the hornet will have to accelerate and overcome its own inertia to intercept it. Alternatively, the device can be manufactured in a more compact version, 50 mm wide or even smaller, which maintains capture effectiveness but reduces the probability of the outgoing bee not being captured. Larger values (e.g. 300-400 mm) allow higher exit speeds at the expense of bulky devices that are difficult to handle and offer greater wind resistance.

The device (4) has a compact height of 40 mm, taking advantage of the fact that the capture cavity (11-1) is external to the device. The vertical height can be greater (e.g. 300-400 mm), and can even be used to provide a greater number of entrance sections (5-1; 5-2) or entrance openings (5-1-1; 5-2-1), for example by stacking rows of sections or entrance openings vertically, to expand the entry/exit area and thus provide more alternative routes for the bees to avoid the Velutinas that prey on the beehive. When the total height of the trap (including the capture cavity provided by the beekeeper in this embodiment) exceeds the size of the brood chamber, handling becomes considerably more difficult.

The device consists of 26 entrance sections (5-1; 5-2) with 26 entrance openings (5-1-1; 5-2-1) covering the entire length of the beehive entrance (3) of a Langstroth-type beehive (although the invention is applicable to any type of beehive). However, it has been found that with half the number of openings and covering half the entrance (and covering the rest of the entrance), the performance is acceptable (albeit lower). In the case of nuclei, two or three access sections may suffice. The number of sections does not depend solely on the length of the beehive entrance, but also on the dimensions chosen for each entrance section and passage cavity. Of course, entrance sections of different sizes, or with different entrance angles, can be combined, depending on different traffic criteria, apiary layout and beehive environment. As for the number of entrance openings per entrance section, it should be noted that a greater number of entrance openings per entrance section may reduce the effectiveness of phototaxis (attraction to light) of the adjusted passage openings (7-1-1; 7-1-2; 7-2-1; 7-2-2), which could be detrimental to capture effectiveness, especially in the case of compact cavities. However, if the height and width of the device are increased, and therefore the dimensions of the passage cavities, several entrance openings per entrance section could be arranged at the bottom of the device without any noticeable negative effect.

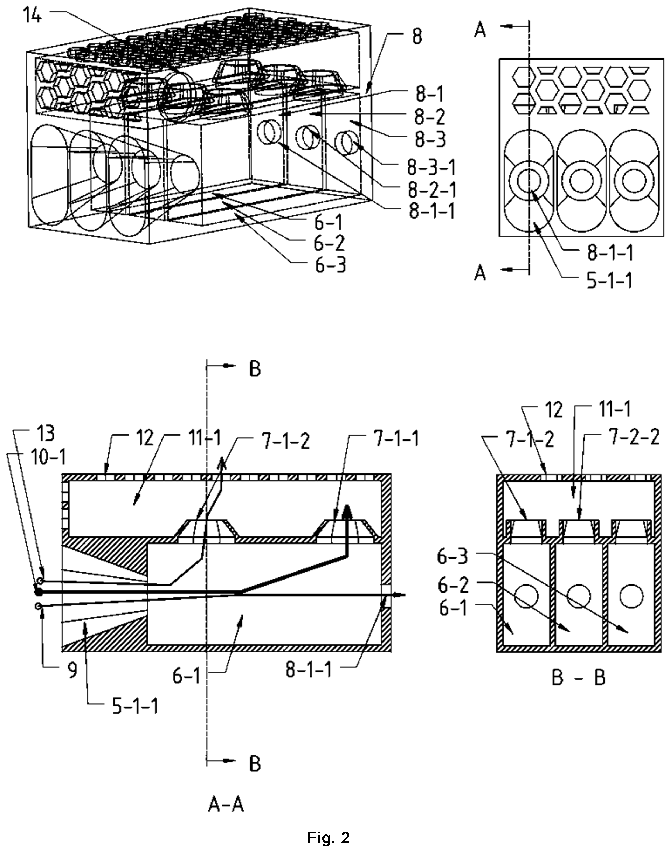

Each entrance section (5-1; 5-2) consists of an entrance opening (5-1-1; 5-1-2) whose section is progressively reduced from an obround section with an end arcs diameter of 15 mm to a circular section with a diameter of 12 mm, allowing both Velutinas and honeybees (including the queen bee and drones) to pass through it (9; 10-1). This value is merely an example; opening values of up to 10 mm hinder the manoeuvrability of Velutinas compared to honeybees, although both have difficulty passing through them. Larger openings, for example between the wingspan of a bee and the wingspan of the alien species, facilitate the entry of bees while hindering the entry of the alien species, which loses speed in its pursuit of the former and hinders attacks during entry. Values greater than the wingspan of the alien species facilitate entry into the passage cavity, which can facilitate the capture of Velutina hornets. When the latter option is chosen, it is also possible to insert a pre-filter slightly larger than the wingspan of the bees between the passage cavities and the interior of the beehive, to maximise the capture of Velutina while restricting attacks on bees in the passage cavity. However, larger entrance openings (5-1-1; 5-1-2) also allow more light to enter the passage cavities (6-1; 6-2) from the direction of the corresponding entrance openings, which reduces the effectiveness of the adjusted passage openings (7-1-1; 7-1-2; 7-2-1; 7-2-2) by phototaxis, especially when the passage cavities are compact. As the adjusted passage opening is reduced (see section A-A in Fig. 2), the alien species first tends to walk through the passage opening until it avoids passing through it when the opening is close to the minimum opening necessary to allow its passage.

When the Velutina has passed through an entrance opening (5-1-1) to reach the corresponding passage cavity (6-1), it encounters the beehive entrance through which no light enters, and one or more adjusted passage openings (7-1-1; 7-1-2) at the top of the passage cavity. Due to phototaxis and the Velutina hornet's natural tendency to ascend, it is attracted to the adjusted passage opening, which ultimately leads it to a capture cavity (11-1). This effect is enhanced when the passage cavity (6-1) is large enough for the Velutina to fly comfortably. However, it is still present even if it has to climb the walls of the passage cavity. Although two adjusted passage openings (7-1-1; 7-1-2) per passage cavity (6-1; 6-2) are shown in the present figure, the invention also achieves its effect with only one. Similarly, different passage cavities (6-1; 6-2) may have different numbers of adjusted passage openings (7-1-1; 7-1-2; 7-2-1; 7-2-2). These adjusted passage openings are dimensionally configured by transition from a 10 mm diameter obround-shaped section covering the upper surface of the passage cavity to a 10 mm diameter circular section. This arrangement reduces the reverse passages of Velutina from the capture cavity to the passage cavity. It is also possible to make additional smaller openings through which neither bees nor Velutina hornets can enter along the transition from the obround to the circular section, in order to reduce reverse passages. These dimensions must be adapted to the dimensions of the alien species to be captured.

In any case, despite this attraction, the Velutina may sometimes enter the beehive. In this case, when the Velutina returns to the passage cavity (6-1) to leave the beehive, the adjusted passage openings, due to phototaxis and because they are higher than the entrance openings, attract the Velutina more, inviting it to pass through them (10-2), thus ending up in the capture cavity. In order to improve the light contrast between the adjusted passage openings, the walls of the passage cavity are preferably made of opaque or, at most, translucent material.

The device in Figure 1 does not include a passage filter unit (see reference 8 in Figure 2). Although the absence of such a filter unit may seem to be a mere limitation, there are reasons why the inclusion of such filters may not be advisable in certain circumstances. For example, between March and July, beehives may swarm (even if they have been divided at the beginning of the year). The presence of such filters may hinder the exit of the queen and the swarm, and especially the exit of the drones, particularly the larger ones. Therefore, even if the queen were to exit through a filter such as the one in Figure 2 (assuming that the passage filter openings are large enough), if the larger drones cannot exit, genetic regression could occur, which is undesirable. When filters are integrated into a beehive entrance device, the alternative is to leave the beehive without beehive entrance device, which is equally undesirable, since if the Velutina hornets are not captured and return to their nest, a calling effect occurs that only increases Velutina activity in the vicinity of the beehive. During these periods, it is therefore preferable to have protection that, although limited, offers more protection than the absence of the device.

**Figure 2** shows another device comprising a single capture cavity (11-1) within the volume of the device common to all adjusted passage openings (7-1-1; 7-1-2; 7-2-1; 7-2-2), a fixed passage filter unit (8) formed in the same piece, with three passage filter sections (8-1; 8-2) with three passage filter openings (8-1-1; 8-2-1), and a cleaning and redirection opening (14), suitable for protecting a small nucleus hive. The description of the elements common to Figure 1 is not repeated. The capture unit has a plurality of 7 mm diameter hexagonal openings (12) that connect the capture cavity (11-1) with the exterior, arranged on the upper surface and on the upper portion of the front surface, in such a way as to allow the colony members (13) to pass to the exterior and prevent the passage of alien species (10-1). These openings may be arranged in a separate piece (not shown), so that it can be replaced by another of a different size and the same device can be adapted to other species of both colony members and species alien to the colony. The walls of the capture unit may be made of transparent material to improve light entry (this is not a requirement). In fact, it is possible to eliminate these openings when using transparent material, which can improve impermeability (e.g. against rainwater) at the expense of reduced ventilation. The passage filter openings (8-1-1; 8-1-2) are circular holes with a diameter of 7 mm (other shapes and sizes are possible, e.g. oval, elliptical or keyhole-shaped), which offer medium discrimination for Vespa Velutina, and are aligned with the entrance openings (5-1-1; 5-1-2), allowing bees to exit more quickly. Although a fixed filter has been shown, alternatively, the filters may form a piece or part of a piece that can be removed from the rest and taken out or replaced with a different filter. In the latter case, it is possible to have filters of different sizes that are better suited to the particular species of bees in the beehive, as well as to the time of year or Velutina pressure (if the beekeeper has good control of each beehive and can anticipate the swarming, they can use more restrictive filters (up to 5.5-6 mm in circular section diameter)). Similarly, filters with aligned and misaligned holes can be chosen as appropriate. The rear surface includes magnets (not shown) for attachment to a metal plate mounted on the beehive entrance. In terms of dimensions, the device in the figure has a height of 60 mm including the capture unit.

The cleaning and redirection opening (14) can be used to increase the capacity of the capture cavity (11-1) by adding an adjacent container directly or by means of a redirection tube (not shown). To facilitate redirection, it is possible to use attractants in this container. It is also possible to connect a suction device to it for the removal of corpses that may perish from starvation in it, or live specimens of Velutina.

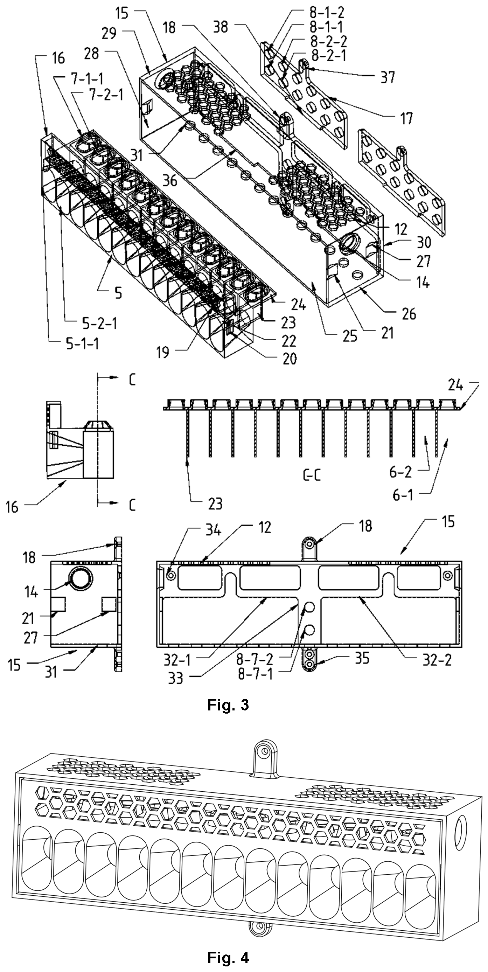

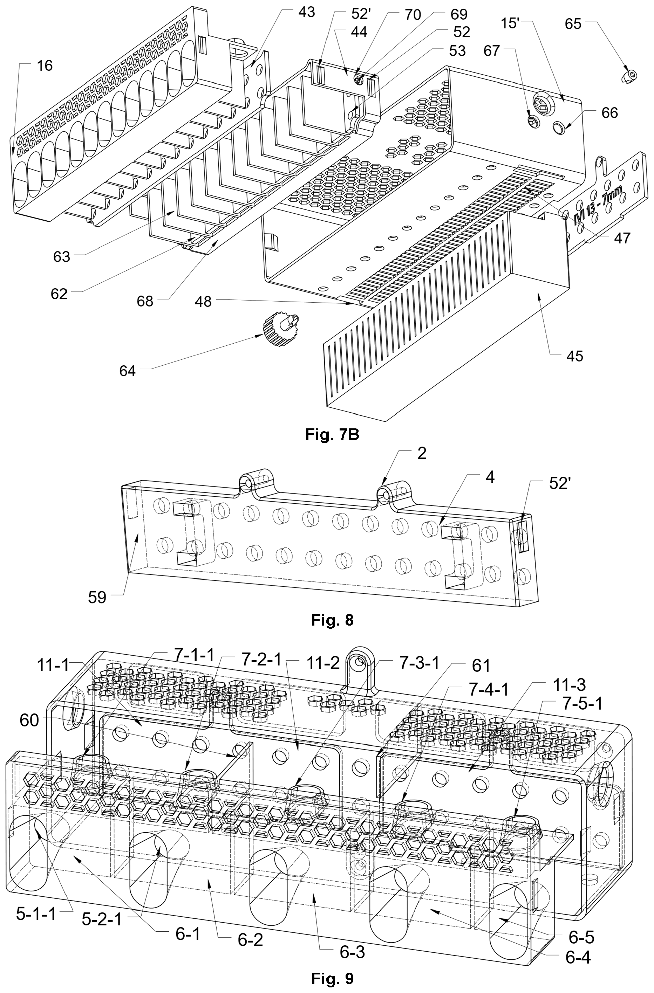

**Figure 3** shows a device formed by two separate devices: a removable front device (16) and a base device (15). These devices preferably have a temporary fixing and locking mechanism (20; 21), represented in a non-limiting manner as a protrusion on the base (15) that is subjected to pressure by inserting the front (16) until it receives a notch from the front (16), at which point the pressure decreases, resulting in a temporary locking mechanism with a click-type position lock and resulting in an assembly that has entrance openings (5-1-1; 5-1-2), passage cavities (6-1; 6-2), adjusted passage openings (7-1-1; 7-1-2) and a capture unit (11-1) analogous to that described with reference to Figures 1 and 2. The passage cavities (6-1; 6-2) are independent and are formed after insertion by the interaction of the surfaces (23 and 24) of the front (16) and the surfaces (26; 28) of the base (15). The capture unit is also formed by the interaction of the surfaces (26; 28; 29; 30) of the base with the surfaces (22; 24) of the front panel. Although the passage filter unit (7-1-1; 7-2-1) has been represented as a single piece together with the rest of the elements of the front piece (16), it is also possible to separate them and provide it with a lateral slit similar to that of the base (slit 20 of base 16), and insert this separate piece into the protrusion of the temporary fixing and locking mechanism of the beehive entrance accessory (27), after which a front panel (16) without passage cavities (6-1; 6-2) would be inserted to form the equivalent assembly. It is also possible to install a closure accessory (59) in the temporary fixing and locking mechanism of the beehive entrance accessory (27) to completely cover the beehive entrance with a single click and facilitate transhumance (**figure 8**). The base device may also have optional small holes (31) (equal to or less than 7 mm in diameter) to facilitate cleaning by the beehive colony. These holes can be temporarily covered if necessary. The base device may consist of different fastening elements (18; 34; 25) to attach it to the beehive (1), both internal and external to the volume of the device.

Optionally, when passage filtration is desirable, two removable passage filter modules (17) can be installed into the removable passage filter module installation openings (32-1; 32-2) of said base. By using removable passage filter modules with passage filter openings of different diameters (e.g. 5, 5.5, 6, 6.5 or 7 mm), it is possible to adapt to different alien species, different times of the year or different alien species pressure. To change the filter module, it is not necessary to remove the base device (15) from the beehive (1). Simply pull off the front panel, change the filter modules (17) and reinsert the front panel. The filter modules may have a temporary click-type locking element (17) (not shown) and may also have a screw hole. Optionally, a filter module may also have a tab (38) configured to be inserted into a slot (36) in the base (15) to facilitate temporary locking. Naturally, the base device could be arranged with a single removable module installation opening (32-1) so that all the passage filter openings are contained therein. In the figure, two openings (32-1; 32-2) have been chosen to allow the connection of the upper (29) and botton (25) surfaces of the base by means of a portion (33) of the rear surface in the central part. This portion provides greater structural integrity to the assembly, especially if it is manufactured from some type of plastic. In this case, the corresponding passage filter openings (8-7-1; 8-7-2) can be arranged in this plastic portion so as not to obstruct the passage through the corresponding entrance section.

In the example shown, the passage filter openings (8-1-1; 8-2-1) have been arranged so that they are not aligned with the entrance openings (5-1-1; 5-2-1). The misaligned openings prevent the Velutina from detecting the exit of a bee in advance. They also disorient the Velutina hornet that enters in pursuit of a bee, which, due to its smaller size, lower inertia and greater manoeuvrability, reaches the misaligned hole without difficulty, while the Velutina hornet finds itself cornered and approaching the adjusted passage opening that will lead it to the capture cavity through phototaxis. However, these advantages come at the cost of slowing down the bee's exit speed, thus reducing the probability that an exiting bee will not be captured by a Velutina outside the beehive. The choice of one configuration or the other depends on the specific application, time of year, environment and Velutina pressure. Since the passage filter modules are removable, it is also possible to switch between aligned and misaligned filters as appropriate. Although not shown, the base device (15) could have two or more front device receiving cavities by dividing the interior volume of the base device horizontally, so that each receiving cavity is as described above in the figure and the device is formed by inserting several front devices into such a base device. This allows for greater structural integrity of the assembly. **Figure 4** shows the device of Figure 3 fully assembled.

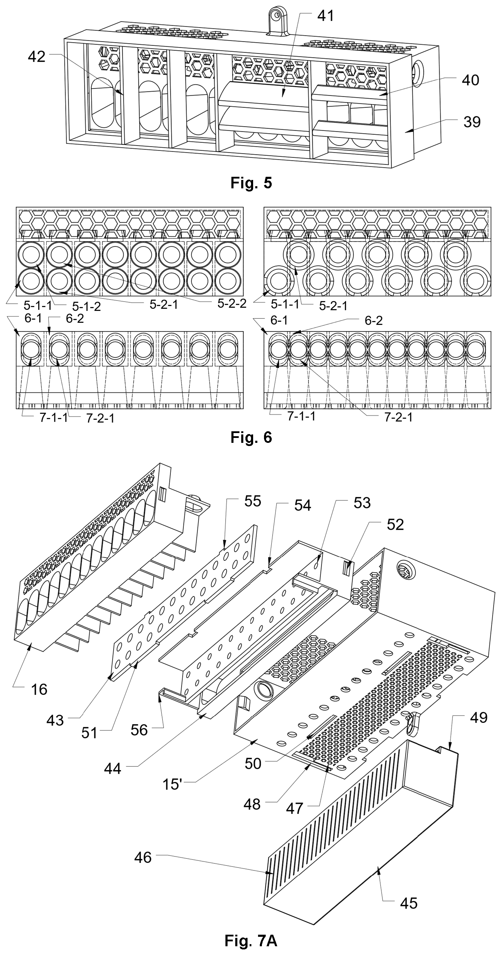

**Figure 5** shows several entry mechanisms to deter the return of Velutina hornets once they begin to move towards the passage cavity. The first, which is also shown in the previous figures, consists of progressively reducing the section of each entrance opening (5-1-1; 5-2-1) between a section of the opening closest to the outside and a section of the opening closest to the corresponding passage cavity. This mechanism reduces the manoeuvrability and field of vision of the Velutina hornets, deterring them from turning around and returning to the outside. Three other mechanisms (40; 41; 42) have been added to this mechanism by means of an entry accessory (39). However, any of these other three could directly replace the first one by taking its place. Similarly, the entrance accessory could have a single additional mechanism for all openings instead of three different ones, or several entrance accessories could be arranged one behind the other. Any combination is possible. The second (40) consists of inclined slats, preferably at an angle of 30-45 degrees to the horizontal, acting as a blind that limits the amount of light entering the passage cavities through the entrance opening. The third (41) is a variation of the previous one using curved slats, which allow better control of the amount of light entering and can force the alien species individual to move vertically while advancing horizontally towards the passage cavity. The fourth (42) consists of delimiting the openings horizontally by means of vertical walls (which in the figure are separated by 30 mm, sufficient for bees to fly through, but limiting for larger species), which makes entry/exit difficult. In addition, the fourth mechanism can be combined with the second or third in the same section, dividing the inclined or curved slats vertically at the desired distance.

**Figure 6** shows on the left the elevation and plan of a device with two entrance openings (5-1-1; 5-1-2) for each passage cavity (6-1) and adjusted passage opening (7-1-1), and on the right, an elevation and plan view of a device with one entrance opening (5-1-1) for each passage cavity (6-1) and adjusted passage opening (7-1-1), with the entrance openings arranged at different heights.

**Figure 7A** shows a device according to the invention that incorporates an additional accessory (44). The front device (16) is identical to that in Figure 3. The intermediate filtering device (43) is a filtering module for additional accessories with the same openings as the filter modules (17) and is configured to be inserted before said additional accessory so that alien species do not reach the additional accessory. This device (43) is optional and only necessary if the additional accessory (44) requires it. Its positioning and alignment can be facilitated by protrusions (51; 55) that are inserted into specially adapted slots (50; 54). These fastening elements are optional, and the filter and accessory can be attached to the front device (16) so that the entire assembly can be inserted as a single piece into the modified base device (15'). The modified base device (15') is a modification of the device (15) in Figure 3, wider (100 mm compared to 50 mm) to accommodate the additional accessory (44), and comprises all the elements of the base device (15), adding a unit of lower openings (47), sized so as not to allow colony members from the beehive (1) to pass through, and insertion slots (48) adapted to receive an L-shaped tab (49) of a lower accessory device (45), so that said tab is inserted through the widest section of the insertion slot (48) and slides towards the narrowest section, and the lower accessory (45) is temporarily fixed to the modified base device (15'). Both the lower accessory device (45) and the slots (48) and lower opening unit (47) are optional (depending on the requirements of the additional accessory). The additional accessory (44) may have a beehive entrance accessory temporary fixing and locking mechanism (52) identical to the temporary fixing and locking mechanism (20) adapted to be temporarily fixed to the beehive entrance accessory temporary fixing and locking mechanism (27). This mechanism (52) is optional, since the beehive entrance accessory can be fixed to the front accessory (16), optionally via the filter module for additional accessory (55), so that the entire assembly is inserted as a single piece, which is temporarily locked by the fixing and locking mechanism provided in the front device (16; 20) and the modified base (15'; 21). If the base comprises the fastening slots (48), and if the opening of these is sufficient to allow the passage of colony members through them, the additional accessory (44) must have elements to prevent such passage (56). The additional accessory (44) may be of the type of any previous art beehive entrance accessory that can no longer be used because its place is taken by a device for capturing alien species, such as those described in this description and the accompanying claims. Figure 7A shows an additional accessory for collecting pollen (44) by filtering colony members through openings (53) that are sufficiently small, in the example, circular holes 5 mm in diameter, to prevent the passage of worker bees together with the pollen collected on their hind legs, which falls off when they attempt to pass through said openings, as well as a pollen collection container (45). This container (45) has been represented on a very small scale (with a capacity for approximately 200 g of pollen with a density of 0.6 kg/l) to allow for the correct representation of the assembly. This pollen collection container (45) may comprise ventilation openings (46). The pollen shed when attempting to pass through passes through the lower opening unit (47) into the container (45).

**Figure 7B** shows an alternative pollen trap accessory, where the support (62) for the openings (53) is provided with a rotation shaft (69) that rotates when the knob (64) is turned, resting on the bearing (65), both inserted through openings in the base (66, and its symmetrical counterpart on the opposite side, not shown) and the openings in the accessory (70 and its symmetrical counterpart on the opposite side, not shown), which allows the pollen trap accessory to be activated and deactivated from the outside. The accessory has spacers (63) that reduce the number of pollen trap openings accessible from an entrance section. The support (62) can be generated inside the accessory (44) during additive manufacturing of the assembly (e.g. SLA or similar) or introduced when printing the accessory 44 using FDM 3D printing by pausing the print. Alternatively, the accessory (44) may have a slot in its upper part (not shown) for insertion. The locking surface (68) allows the openings (31) to be closed during operation in order to prevent access to the interior without passing through the accessory. The direction of insertion of the accessory can be reversed (locking by means of 52' instead of 52 and using 67 instead of 66 to receive 65 and 64) by deactivating the device so that said openings (31) remain open.

In another embodiment that has not been represented, the additional accessory (44) is a mechanical parasite remover for colony members, consisting of a brush with soft bristles arranged in the passage section of the colony members into the interior of the beehive (instead of the holes 53 of the additional accessory 44), so that said members are brushed by the bristles, dislodging said parasites, such as varroa. Said parasites pass through the lower openings (47) and may fall to the ground or be collected in the container (45) if present, allowing visual diagnosis of the presence of varroa.

In yet another embodiment that has not been shown, the additional accessory (44) may comprise, instead of the holes 53, a surface adapted for placing medication (e.g. varroa treatment) or food on it. In the case of a treatment against varroa mites, the mites may be dislodged by the action of the medication and may pass through the lower openings (47) into the container (45) for diagnosis.

In yet another embodiment not shown, the additional accessory (44) may comprise, instead of the holes (53), a heat treatment accessory. This accessory may have passage cavities inside the accessory similar to the passage cavities (6-1; 6-2; 6-3), and may have electric heating elements, which may be powered internally by batteries, or externally, for example by connection to the mains or to a solar panel. It also has a thermostat configured to maintain the temperature of said passage cavities at 38-40°C. These temperatures cause the varroa to detach from its host. Treatment periods can be controlled remotely by means of a remote activation switch that controls the power supply, or by means of a microcontroller.

In yet another embodiment that has not been depicted, the additional accessory (44) may comprise, instead of the holes (53), a monitoring and diagnostic accessory based on sensor information, such as infrared detection sensors, acoustic sensors, cameras, and infrared cameras. As the members of the colony pass through the additional accessory, an infrared sensor is able to detect their passage. This information can be sent to a microcontroller to monitor the activity of the beehive, for example the number of passages. Alternatively, a conventional or infrared camera can be provided, which can be used to detect the presence of diseases or varroa mites. The images can be sent to a processor which, by means of pattern detection, or by means of artificial intelligence previously trained with images of such diseases/parasites, detects their presence. This information can be processed in the beehive itself (for example, to activate another accessory as described below) and/or for remote transmission to a central management system or to generate alerts to a mobile device.

In yet another embodiment that has not been represented, instead of a single additional accessory, an accessory unit with several accessories may be provided, so that the colony members are initially monitored by a first device, and then another function is performed. This function may be independent of the monitoring (e.g. pollen collection) or may depend on the result of the monitoring. For example, if a first diagnostic device detects the presence of varroa mites, a second accessory could close off access to that cavity inside the beehive (e.g. with a motor-driven mechanism such as that described in KR102078214B1). Additionally, the individual could be retained in a heat treatment or medication application accessory for removing parasites.

**Figure 8** shows a closure accessory (59) with a fastening mechanism (52') adapted to fasten the closure to the fastening and locking element (27) of the base device (15). It has additional fastening elements (2), using screws, for greater security. In addition, it has slots (4) for inserting a cord and pulling it to uninstall it.

**Figure 9** shows a device with five passage cavities (6-1; 6-2; 6-3; 6-4; 6-5) and three capture cavities (11-1; 11-2; 11-3) internally delimited by two capture cavity separation elements (60; 61), one of which forms part of the base device and the other part of the front device. The adjusted passage openings (7-1; 7-2) lead to the capture cavity (11-1), the adjusted passage opening (7-3) to the capture cavity (11-2) and the adjusted passage openings (7-4; 7-5) to the capture cavity (11-3). This configuration prevents the passage of specimens of alien species, as well as members of the colony, through the capture unit, which may be desirable, for example, if the brood chamber is internally divided (e.g. by having multiple queens), or if an entrance section (e.g. that corresponding to passage cavity 6-3) is dedicated to a specific function that so requires (e.g. evaluating the effectiveness of different attractant liquids). Such an entrance section could have a conduction and cleaning opening at the top of the corresponding capture cavity (11-2), which is not shown. However, dividing the capture unit into multiple capture cavities increases maintenance and cleaning work. In order to provide flexibility, the separation surfaces (60; 61) may be removable. The internal section of the entrance openings (5-1-1; 5-2-1) is elliptical. The device covers part of the length of the beehive entrance, so that two or more devices can be arranged along it (for example, if the beehive population is very high).

The device of the present invention may be manufactured from various materials, for example, sheet metal, wood or plastic, and by means of plastic injection, subtractive or additive manufacturing methods, such as milling or three-dimensional printing, using technologies such as FDM (fused deposition modelling), SLA (stereolithography), DMP (direct metal printing), DMLS (direct metal laser sintering) or any other known in the art, in thermoplastic materials, ceramics, metal or others. For example, the device (4) in Figure 1 or the base devices (15, 15'), front device (16), as well as others shown in Figures (17, 39, 43, 44, 45), can be manufactured by 3D printing, together or individually. Manufacturing by 3D printing can be carried out by laminating a three-dimensional model of the object to be printed using suitable software, for example PrusaSlicer, producing a file, for example G-Code, which constitutes a digital model of the object, in addition to the instructions to be executed by the 3D printer to manufacture it. This file can be stored on any known computer-readable storage medium (USB stick, hard drive, memory, etc.).

## Claims

1. Device (4) for facilitating capture of individuals of a species alien to a colony of a beehive, which individuals are attracted to light, said device configured to be located at an entrance (3) of a beehive (1), so that a transit (9) of members of the colony of the beehive between the beehive and the outside is carried out through said device, comprising:
- an entrance unit (5) exposed to the outside, said entrance unit comprising two or more independent entrance sections (5-1; 5-2), wherein each of said independent entrance sections comprises one or more entrance openings (5-1-1; 5-1-2; 5-2-1; 5-2-2), each entrance opening adapted to allow a transit of both members of the colony (9) and individuals of the species alien to the colony (10-1) between the device and the outside;
- a passage cavity unit (6) comprising as many independent passage cavities (6-1; 6-2) as independent entrance sections (5-1; 5-2), wherein each independent passage cavity corresponds to only one corresponding independent entrance section, each independent passage cavity being arranged so that all the one or more entrance openings of said corresponding independent entrance section lead to only said independent passage cavity, said independent passage cavity being open at one of its surfaces to allow, directly or indirectly, a transit of members of the colony of the beehive into the interior of the beehive (9), wherein one or more separation surfaces (23) separate each independent passage cavity from adjacent independent passage cavities and are configured to prevent a transit of individuals of the species alien to the colony;
- an adjusted passage unit (7), comprising as many adjusted passage sections (7-1; 7-2) as independent passage cavities (6-1; 6-2), wherein each adjusted passage section corresponds to only one corresponding independent passage cavity, each adjusted passage section (7-1; 7-2) comprising one or more adjusted passage openings (7-1-1; 7-1-2; 7-2-1; 7-2-2);
- a capture unit for capturing individuals of the species alien to the colony (11), comprising one or more capture cavities (11-1; 11-2; 11-3), said capture unit being arranged at the upper part of the device and configured to allow light from the outside to enter the one or more capture cavities and to prevent individuals of the species alien to the colony from escaping to the outside from said one or more capture cavities;
wherein each said adjusted passage section is arranged at the top of the corresponding independent passage cavity and at the bottom of the capture unit, so as to allow light to enter from an associated capture cavity associated with the corresponding independent passage cavity through the one or more adjusted passage openings of said adjusted passage section, and is configured to allow a transit (10-1; 10-2) of individuals of the species alien to the colony through the one or more adjusted passage openings of said adjusted passage section from the corresponding independent passage cavity to said associated capture cavity, and wherein adjusted passage openings of two or more adjusted passage sections (7-1-1; 7-1-2; 7-2-1; 7-2-2) lead to a common capture cavity (11-1).

2. Removable front device (16), configured to be inserted into a base device (15; 15'), such that, once inserted, the assembly forms a device for facilitating capture of individuals of a species alien to a colony of a beehive, which individuals are attracted to light, said assembly configured to be located at an entrance (3) of a beehive (1), so that a transit (9) of members of the colony of the beehive between the beehive and the outside is carried out through said removable front device (16), wherein the removable front device comprises:
- a front surface (22), an intermediate surface (24), and one or more separation surfaces (23);
- an entrance unit (5) exposed to the outside, said entrance unit comprising two or more independent entrance sections (5-1; 5-2), wherein each of said independent entrance sections comprises one or more entrance openings (5-1-1; 5-2-1), each entrance opening adapted to allow a transit of both members of the colony of the beehive (9) and individuals of the species alien to the colony (10-1) between the removable front device (16) and the outside, wherein the entrance unit is arranged such that the one or more entrance openings of each independent entrance section are located in the lower part of the front surface (22), wherein a number of separation surfaces (23) is equal to a number of independent entrance sections minus one, wherein each of the separation surfaces (23) is arranged behind the entrance unit (5) at the boundary between two adjacent independent entrance sections (5-1, 5-2) and wherein the intermediate surface (24) covers said separation surfaces (23) from above, so that when the removable front device is inserted into the base device, a passage cavity unit (6) is formed, wherein the passage cavity unit (6) comprises as many independent passage cavities (6-1; 6-2) as independent entrance sections (5-1; 5-2), wherein each independent passage cavity corresponds to only one corresponding independent entrance section, wherein each independent passage cavity is arranged so that all the one or more entrance openings of said corresponding independent entrance section lead to only said independent passage cavity, and is open at its rear surface to allow, in operation, directly or indirectly, a transit of members of the colony of the beehive into the interior of the beehive (9), wherein said separation surfaces (23) separate each independent passage cavity from adjacent independent passage cavities and are configured to prevent a transit of individuals of the species alien to the colony; and
- an adjusted passage unit (7), comprising as many adjusted passage sections (7-1; 7-2) as independent passage cavities (6-1; 6-2), wherein each said adjusted passage section corresponds to only one corresponding independent passage cavity, each adjusted passage section (7-1; 7-2) comprising one or more adjusted passage openings (7-1-1; 7-1-2; 7-2-1; 7-2-2);
wherein, when the removable front device is inserted into the base device, a capture unit for capturing individuals of the species alien to the colony (11) is formed, comprising one or more capture cavities (11-1; 11-2; 11-3), the one or more capture cavities being delimited at their bottom by the intermediate surface (24), said capture unit being configured to allow light from the outside to enter the one or more capture cavities, and to prevent individuals of the species alien to the colony from escaping to the outside from said one or more capture cavities;
wherein each said adjusted passage section is arranged in a portion of the intermediate surface (24) located at the top of the corresponding independent passage cavity and at the bottom of the capture unit, so as to allow light to enter from an associated capture cavity associated with the corresponding independent passage cavity through the one or more adjusted passage openings of said adjusted passage section, and is configured to allow a transit (10-1; 10-2) of individuals of the species alien to the colony through the one or more adjusted passage openings of said adjusted passage section from the corresponding independent passage cavity to said associated capture cavity, and wherein adjusted passage openings of two or more adjusted passage sections (7-1-1; 7-1-2; 7-2-1; 7-2-2) lead to a common capture cavity (11-1).

3. Base device (15), configured to receive by insertion one or more removable front devices (16) according to claim 2, such that after insertion, the assembly forms a device for facilitating capture of individuals of a species alien to a colony of a beehive, which individuals are attracted to light, said base device configured to be located at the entrance (3) of the beehive (1), so that a transit (9) of members of the colony of the beehive between the beehive and the outside is carried out through said base device (15), wherein the base device comprises:
- one or more front device receiving units, each comprising a corresponding receiving cavity configured to receive a removable front device (16) according to claim 2 in its internal volume by insertion through a front section of said receiving cavity, wherein each front device receiving unit comprises a rear surface (30), two side surfaces (26, 28), a bottom surface (25) and a top surface (29), said side surfaces (26, 28), bottom surface (25) and top surface (29) configured to prevent a transit of individuals of the species alien to the colony to the outside through them, and said rear (30), side (26, 28), bottom (25) and top (29) surfaces delimiting the corresponding receiving cavity, wherein the top surface (29) is additionally configured to allow light from the outside to enter one or more capture cavities (11-1, 11-2, 11-3) of a capture unit (11), and wherein the rear surface (30) comprises one or more openings for installing a passage filter module (32-1; 32-2); wherein when the removable front device is inserted into the corresponding receiving cavity:
- the bottom surface (25) is additionally configured to receive one or more separation surfaces (23) of the removable front device (16), so that a passage cavity unit (6) is formed, wherein the passage cavity unit (6) comprises as many independent passage cavities (6-1; 6-2) as independent entrance sections (5-1; 5-2) of an entrance unit (5) of the removable front device (16), wherein a number of independent passage cavities is greater than or equal to two, and wherein each independent passage cavity is open at its rear surface to allow, directly or indirectly, a transit of the members of the colony of the beehive from the outside through a corresponding entrance section into the interior of the beehive (9),
- the side surfaces (26, 28) are configured to receive an intermediate surface (24) of the removable front device (16), so that said volume is divided into a lower volume comprising the entrance unit (5) of the removable front device (16) and the passage cavity unit (6), and an upper volume comprising the capture unit for capturing individuals of the species alien to the colony (11),
- the upper surface (29) delimits said upper volume by covering said capture unit for capturing individuals of the species alien to the colony (11), and
- said side and top surfaces receive said removable front device (16), wherein said intermediate surface (24) of the removable front device (16) comprises an adjusted passage unit (7), comprising as many adjusted passage sections (7-1; 7-2) as independent passage cavities (6-1; 6-2), wherein each said adjusted passage section corresponds to only one corresponding independent passage cavity, each adjusted passage section (7-1; 7-2) comprising one or more adjusted passage openings (7-1-1; 7-1-2; 7-2-1; 7-2-2), wherein each said adjusted passage section is arranged in a portion of said intermediate surface located at the top of the corresponding independent passage cavity and at the bottom of the capture unit, such that the one or more capture cavities (11-1; 11-2; 11-3) are formed, allowing light to enter from an associated capture cavity associated with the corresponding independent passage cavity through the one or more adjusted passage openings of said adjusted passage section, and such that adjusted passage openings of two or more adjusted passage sections (7-1-1; 7-1-2; 7-2-1; 7-2-2) lead to a common capture cavity (11-1), wherein each of said adjusted passage sections is configured to allow a transit (10-1; 10-2) of individuals of the species alien to the colony through the one or more adjusted passage openings of said adjusted passage section from the corresponding independent passage cavity through the intermediate surface to said associated capture cavity (11-1; 11-2).

4. Device (15, 16) for facilitating capture of individuals of a species alien to a colony of a beehive, which individuals are attracted to light, said device configured to be located at an entrance (3) of a beehive (1), so that a transit (9) of members of the colony of the beehive between the beehive and the outside is carried out through said device, comprising a removable front device (16) according to claim 2 inserted into a base device (15) according to claim 3 and wherein, preferably, said removable front device and said base device are provided with a temporary fixing and locking mechanism (20, 21) for fixing the removable front device (16) to the base device.

5. Device (4) according to claims 1-4, wherein the capture unit (11) for capturing individuals of the species alien to the colony has light entrance openings (12) to allow light to enter the one or more capture cavities, wherein, preferably, said light entrance openings (12) are additionally configured to allow members of the colony of the beehive (13) to exit to the outside while preventing exit of individuals of the species alien to the colony (10-1).

6. Device (4) according to claims 1-5, wherein the capture unit (11) comprises a single capture cavity and all the adjusted passage openings of all the adjusted passage sections lead to said capture cavity.

7. Device (4) according to claims 1-6, wherein the independent passage cavities (6-1; 6-2) are dimensioned based on a wingspan of individuals of the species alien to the colony and/or members of the colony of the beehive, preferably in such a way that a transit of individuals of the species alien to the colony while flying through them is hindered, while members of the colony of the beehive can fly through them without being substantially affected.

8. Device (4) according to any of the preceding claims, additionally comprising:
a passage filter unit (8), comprising as many independent passage filter sections (8-1; 8-2) as independent passage cavities, wherein each said independent passage filter section corresponds to one corresponding independent passage cavity (6-1; 6-2) and communicates only with said corresponding independent passage cavity, each said independent passage filter section (8-1; 8-2) arranged such that said transit (9) between the corresponding independent passage cavity and the interior of the beehive is effected through the open surface of the corresponding independent passage cavity and the independent passage filter section, each said passage filter section (8-1; 8-2) comprising one or more passage filter openings (8-1-1; 8-2-1), wherein said one or more passage filter openings are configured to allow members of the colony of the beehive to transit directly or indirectly into the interior of the beehive (9), and not allowing a transit of individuals of the species alien to the colony, wherein preferably said passage filter unit (8) is, at least in part, removable, and wherein, optionally, the one or more passage filter openings are aligned or misaligned with respect to the one or more entrance openings;
wherein, when the device is according to claim 3, said passage filter unit (8) is at least partially removable, and wherein the device comprises as many removable passage filter modules (17) as openings for installing a passage filter module (32-1; 32-2), wherein said passage filter unit (8) comprises said one or more removable passage filter modules (17); and
wherein, when the device is according to claim 2, said passage filter unit (8) is attached, temporarily or permanently, to the passage cavity unit (6).

9. Device (4) according to any of claims 1, 2, 4-8, wherein each said entrance opening (5-1-1; 5-2-1) has one or more mechanisms to deter individuals of the species alien to the colony from returning to the outside once they have begun to pass through the corresponding independent passage cavity (6-1; 6-2), wherein optionally the one or more mechanisms used by each said entrance opening are different from those of other entrance openings, and wherein optionally the one or more mechanisms comprise one or more of the following:
a) a section of each entrance opening (5-1-1; 5-2-1) is progressively reduced between a section of the opening closest to the outside and a section of the opening closest to the corresponding independent passage cavity, b) each entrance opening (5-1-1; 5-2-1) is vertically delimited by inclined (40) or curved (41) surfaces between a section of the opening closest to the outside and a section of the opening closest to the corresponding independent passage cavity, so as to reduce the amount of light entering the independent passage cavity through the entrance opening, or c) each entrance opening (5-1-1; 5-2-1) is horizontally delimited (42) in such a way as to hinder or prevent a transit of the species alien to the colony by flying, for example, by means of a rectangular mesh with a side dimension smaller than the wingspan of individuals of the species alien to the colony.

10. Device (4) according to any of claims 1, 2, 4-9, wherein a cross-section of each said adjusted passage opening (7-1-1; 7-1-2; 7-2-1; 7-2-2) is progressively reduced between the independent passage cavity (6-1; 6-2) and the corresponding capture cavity (11-1; 11-2).

11. Device (4) according to any of the preceding claims, wherein at least one of the one or more capture cavities (11-1; 11-2; 11-3) has one or more openings for cleaning and redirecting individuals of the species alien to the colony (14), said one or more cleaning and redirection openings being adapted to receive one of the following:
a) a section of an external container wherein an entrance opening to said external container is located, for example, the neck of a plastic bottle; b) a tube for redirecting individuals of the species alien to the colony to an external container; c) a suction device inlet for cleaning the capture cavity by suction; or d) a blocking element to prevent the escape of individuals of the species alien to the colony when said cleaning and redirection opening is not in use, such as a plug.

12. Device (4) according to any of claims 1, 2, 4-11, wherein the device additionally comprises a passage pre-filter unit, comprising as many independent passage pre-filter sections as independent passage cavities, wherein each said passage pre-filter section corresponds to an independent passage cavity (6-1; 6-2) and communicates only with the corresponding independent passage cavity, each said passage pre-filter section being arranged such that said transit (9) between the corresponding independent passage cavity and the interior of the beehive is effected through the open surface of the corresponding independent passage cavity and the corresponding passage pre-filter section, each said passage pre-filter section comprising one or more passage pre-filter openings, wherein said passage pre-filter openings are configured to allow the transit of members of the colony of the beehive flying with their wings fully extended, and to allow transit of individuals of the species alien to the colony while preventing them from flying with fully extended wings, wherein preferably said passage pre-filter unit is, at least in part, removable, and wherein, alternatively, the passage pre-filter openings are aligned or misaligned with respect to the one or more entrance openings;
wherein, when the device is according to claim 8, said passage pre-filter unit is interposed between the passage cavity unit (6) and the passage filter unit (8).

13. Device (4) according to any of the preceding claims, wherein the device further comprises an additional beehive entrance accessory unit between the entrance unit (5) and the interior of the beehive, said additional beehive entrance accessory unit comprising one or more additional beehive entrance accessories (44), wherein optionally, said additional beehive entrance accessory unit comprises one or more of the following:
a) an accessory for capturing pollen, b) a mechanical parasite remover for members of the colony of the beehive, c) an accessory for administering medication, d) an accessory for administering food, e) a heat treatment accessory, and f) an entrance monitoring and diagnostic accessory, preferably based on sensor information, such as cameras, infrared cameras and acoustic sensors, and remote transmission of such information, or alerts generated based on such information; and wherein, optionally, the device comprises an intermediate filtering device (43) comprising one or more intermediate filtering openings, wherein said one or more intermediate filtering openings are configured to allow a transit of members of the colony of the beehive to the additional beehive entrance accessory unit, and not allow a transit of individuals of the species alien to the colony.

14. Device (4) according to claim 13, wherein the device comprises one or more lower openings (47) configured to prevent a transit of members of the colony of the beehive and allow a transit of matter released from the members of the colony of the beehive to the outside of the device, such as pollen or varroa specimens, and wherein the device preferably comprises a temporary fixing and locking mechanism (48) for temporarily fixing a container for collecting said matter; and when depending on claim 3, wherein said one or more lower openings (47) are arranged on the bottom surface (25) of the base device (15).

15. Device (4) according to any of claims 13 or 14, wherein the device comprises a first part comprising the entrance unit (5), and a second part comprising the passage cavity unit (6), wherein the additional beehive entrance accessory (44) is configured to be temporarily assembled to the first and/or second part, so that it can be arranged between the entrance unit (5) and the passage cavity unit (6), or after the passage cavity unit, forming the first part, the second part and the additional beehive entrance accessory (44) a single assembly once assembled.

16. Device (4) according to any of claims 1, 3-15, wherein the device additionally comprises a mechanism for temporarily fixing and locking a beehive entrance accessory unit (27), preferably configured to temporarily fix a beehive entrance accessory to the beehive entrance (1), wherein optionally the beehive entrance accessory is a closure accessory (59) configured to prevent the colony of the beehive from leaving the beehive, and when depending on any of claims 13-15, alternatively, to temporarily fix and lock said additional beehive entrance accessory unit.

17. Computer-readable medium storing data which defines both a digital representation of an object and operating instructions adapted to control an additive manufacturing device to fabricate said object using the digital representation of the object when said data is sent to the additive manufacturing device.
